## Europäisches Patentamt

## European Patent Office

## Office européen des brevets

(19)

(11) **EP 0 558 116 B1**

(12) **EUROPÄISCHE PATENTSCHRIFT**

(45) Veröffentlichungstag und Bekanntmachung des Hinweises auf die Patenterteilung:
**15.05.1996 Patentblatt 1996/20**

(51) Int Cl.[6]: **G03B 42/02**, G01T 1/29

(21) Anmeldenummer: **93200407.0**

(22) Anmeldetag: **15.02.1993**

(54) **Verfahren für Röntgenaufnahmen und dafür geeignete Vorrichtung**

Method for radiograms and device suited therefor

Procédé pour radiographies et dispositif approprié

(84) Benannte Vertragsstaaten:
**DE FR GB IT NL**

(30) Priorität: **22.02.1992 DE 4205566**

(43) Veröffentlichungstag der Anmeldung:
**01.09.1993 Patentblatt 1993/35**

(73) Patentinhaber:
- **Philips Patentverwaltung GmbH**
  **22335 Hamburg (DE)**
  Benannte Vertragsstaaten:
  **DE**
- **Philips Electronics N.V.**
  **5621 BA Eindhoven (NL)**
  Benannte Vertragsstaaten:
  **FR GB IT NL**

(72) Erfinder:
- **Conrads, Norbert**
  **W-2000 Hamburg 1 (DE)**

- **Hillen, Walter, Dr.**
  **W-2000 Hamburg 1 (DE)**
- **Maack, Hanns-Ingo**
  **W-2000 Hamburg 1 (DE)**
- **Rupp, Stephan, Dr.**
  **W-2000 Hamburg 1 (DE)**
- **Schäfer, Ingo, Dr.**
  **W-2000 Hamburg 1 (DE)**
- **Schiebel, Ulrich, Dr.**
  **W-2000 Hamburg 1 (DE)**

(74) Vertreter: **Hartmann, Heinrich, Dipl.-Ing. et al**
**Philips Patentverwaltung GmbH,**
**Röntgenstrasse 24**
**D-22335 Hamburg (DE)**

(56) Entgegenhaltungen:
**EP-A- 0 219 897**          **US-A- 4 134 018**

**Beschreibung**

Die Erfindung betrifft ein Verfahren zum Erzeugen von Röntgenaufnahmen mit einem auf einem leitenden Substrat angebrachten Photoleiter, dessen Oberflächenpotential mittels Sonden auslesbar ist, sowie eine Vorrichtung, mit der ein solches Verfahren anwendbar ist.

Ein solches Verfahren und eine solche Vorrichtung sind aus der Veröffentlichung "Proceedings of SPIE", Vol. 626, 1986, Seite 176-184 sowie aus der DE-OS 40 04 348 bekannt. Dabei wird das Potential an der Oberfläche des Photoleiters mittels einer Sondenanordnung ausgelesen. Die Sonden können unterschiedliche Abstände zur Oberfläche des Photoleiters haben, und diese Abstände können beim Auslesen des Photoleiters schwanken. Dies führt zu Artefakten in der mit Hilfe der von den Sonden gelieferten Bilddaten rekonstruierten Röntgenaufnahme, wenn nicht Gegenmaßnahmen ergriffen werden. Zu diesem Zweck wird während des Auslesens fortlaufend der Abstand zwischen den Sonden und der Oberfläche des Photoleiters ermittelt, indem eine Wechselspannung an das Substrat angekoppelt wird. Diese Wechselspannung wird kapazitiv auf die Sonden übertragen, die somit eine Wechselspannungssignal liefern, dessen Amplitude ein Maß für den Sondenabstand ist.

Die Abstandsabhängigkeit der Wechselspannungsamplitude wird bei den in "..SPIE" beschriebenen Verfahren dazu benutzt, Korrekturdaten zu erzeugen, mit denen die Bilddaten beaufschlagt werden, um die Abstandsschwankungen zu kompensieren und die dadurch hervorgerufenen Artefakte zu unterdrücken. Bei dem in der DE-OS 40 04 348 beschriebenen Verfahren hingegen werden die Sonden in Abhängigkeit von den gemessenen Signalamplituden so in Richtung senkrecht zum Photoleiter bewegt, daß der Abstand im wesentlichen konstant bleibt.

Um eine gegenseitige Beeinflussung zwischen den Bildsignalen einerseits und den Wechselspannungssignalen andererseits zu vermeiden, muß die Frequenz der Wechselspannung wesentlich höher sein als die der Bildsignale. Die Bildsignale einerseits und die Wechselspannung andererseits werden daher in zwei Kanälen durch geeignete Filter getrennt und verarbeitet.

Aufgabe der vorliegenden Erfindung ist es, ein Verfahren zu schaffen, das eine Verringerung der Bildartefakte mit geringem Aufwand ermöglicht.

Diese Aufgabe wird erfindungsgemäß gelöst durch folgende Verfahrensschritte:

a) Aufladen des Photoleiters auf ein definiertes Potential
b) Ändern des Subtratpotentials und Auslesen des dadurch bewirkten Potentialverlaufes auf der Oberfläche des Photoleiters
c) Erzeugen von Testdaten, die dem örtlichen und/oder zeitlichen Verlauf des Potentials an der Oberfläche des Photoleiters entsprechen
d) Ermitteln von Korrekturdaten, die der Abweichung der Testdaten von ihrem Idealwert kompensieren
e) Speichern der Korrekturdaten
f) Verarbeitung der Bilddaten von nachfolgenden Röntgenaufnahmen unter Heranziehung der Korrekturdaten.

Die Erfindung basiert zunächst auf der Beobachtung, daß bei einer durch einen Photoleiter und eine Sondenanordnung vorgegebenen Konfiguration sich die Bildartefakte in aufeinanderfolgenden Röntgenaufnahmen nach Art und Umfang wiederholen. Deshalb müssen die Korrekturen für eine Röntgenaufnahme nicht gleichzeitig mit den Bilddaten für diese Röntgenaufnahme ermittelt werden, sondern sie können vorher bestimmt, gespeichert und zur Korrektur nachfolgender Röntgenaufnahmen verwendet werden. Im Idealfall müssen die Korrekturdaten nur ein einziges Mal bestimmt werden. Unter praktischen Verhältnissen ist es jedoch zweckmäßig, die Korrekturdaten öfter zu bestimmen, beispielsweise einmal pro Tag.

Die Erfindung beruht weiterhin auf der Überlegung, daß eine Änderung des Substratpotentials - nach dem Aufladen des Photoleiters - überall auf der Oberfläche des Photoleiters eine Änderung des Potentials bewirkt. Die Änderung des Substratpotentials hat also die gleiche Wirkung wie eine Test-Röntgenaufnahme, bei der die Oberfläche des Photoleiters gleichmäßig belichtet wird. Abgesehen davon, daß eine solche gleichmäßige Belichtung praktisch nur schwer zu erreichen ist, ersetzt die Erfindung hier die Erzeugung der Röntgenstrahlung durch die Veränderung des Substratpotentials. - Bei der Erfindung wird der Verlauf der durch diese Änderung hervorgerufenen Sondensignale als Funktion der Zeit und/oder des Ortes auf der Oberfläche des Photoleiters erfaßt. Im Idealfall müßten die beim Auslesen des Photoleiters bei einem derartigen Test gelieferten Testdaten exakt proportional zur Änderung des Substratpotentials verlaufen - und zwar für alle Sonden und für alle Bildpunkte auf der Oberfläche des Photoleiters mit dem gleichen Proportionalitätsfaktor. In der Praxis ergeben sich jedoch Abweichungen zwischen diesem idealen Verlauf und dem mit den Sonden bestimmten Verlauf. Aus diesen Abweichungen können Korrekturdaten ermittelt werden, die die Abweichungen kompensieren. Diese Korrekturdaten werden gespeichert und bei nachfolgenden Röntgenaufnahmen zur Korrektur der Bilddaten herangezogen.

Mit der Erfindung können nicht nur unterschiedliche Empfindlichkeiten verschiedener Sonden bzw. die ortsabhängig schwankende Empfindlichkeit einer Sonde kompensiert werden, sondern auch frequenzabhängige Signalverformungen, bei denen die von den Sonden gelieferten Signale den zeitlichen Verlauf der Änderung des Substratpotentials nicht exakt nachbilden.

Es sei an dieser Stelle erwähnt, daß aus der US-PS 4,134,018 bereits ein Verfahren zur Korrektur der von den Xenon-Detektoren eines Röntgenschichtgerätes zur Herstellung von Transversalschichtbildern gelieferten Signale bekannt ist, bei dem zwecks Kalibrierung der Detektorkanäle das Hochspannungspotential an den Xenon-Detektoren geändert wird und aus den Änderungen Korrekturfaktoren abgeleitet werden, die bei nachfolgenden Röntgenaufnahmen zur Korrektur der Bilddaten herangezogen werden. - Es handelt sich hierbei um ein zweiteiliges Korrekturverfahren, dessen erster Teil darin besteht, das Detektorausgangssignal einmal bei einem Röntgeneichimpuls und einmal bei einem Spannungsimpuls zu messen. Der Quotient der Ausgangssignale bei diesem ersten, nur einmal durchgeführten Schritt wird gespeichert. Der zweite Schritt besteht darin, das Hochspannungspotential impulsförmig zu ändern und aus dem Produkt des dabei gemessenen Detektorausgangssignals und des erwähnten Quotienten ein Eichsignal zu bilden, auf das die bei einer nachfolgenden Röntgenuntersuchung erzeugten Ausgangssignale dieses Detektorkanals normiert werden.

Das bekannte Verfahren basiert auf der Überlegung, daß, falls sich die Eigenschaften eines Detektorkanals ändern, diese Änderung für alle Ausgangssignale des Kanals bei einer Aufnahme gleich ist. Es genügt daher, während einer Aufnahme die Ausgangssignale aller Detektorkanäle auf das jeweils zugehörige Eichsignal zu normieren, um die Empfindlichkeitsunterschiede der Detektorelemente, aber auch die Verstärkungsunterschiede der Detektorkanäle auszugleichen. Bei der Erfindung wird hingegen davon ausgegangen, daß auch die von einer einzigen Sonde bei einer Röntgenaufnahme gelieferten Signale unterschiedlichen Einflüssen ausgesetzt waren, so daß das Ausgangssignal auch dann schwankt, wenn die Ladungsdichte auf der Oberfläche des Photoleiters konstant ist. Diese Schwankungen werden durch die Maßnahmen c), d), und f) der erfindungsgemäßen Lösung kompensiert.

In einer bevorzugten Ausgestaltung der Erfindung, die sich zur Kompensation unterschiedlicher Empfindlichkeiten verschiedener Sonden bzw. zur Kompensation der ortsabhängigen Empfindlichkeitsschwankungen der einzelnen Sonden eignet, sind folgende Schritte vorgesehen:

a) Änderung des Substratpotentials um einen konstanten Betrag.

b) Bilden von Korrekturfaktoren für auf der Oberfläche des Photoleiters befindliche Bildpunkte in Abhängigkeit von dem Quotienten aus einem für alle Bildpunkte gleichen Referenzwert und den Testdaten.

c) Beaufschlagung der nach einer Röntgenaufnahme ausgelesenen Bilddaten mit dem zugehörigen Korrekturwert derart, daß sich korrigierte Bilddaten ergeben, die proportional zu den Bilddaten und umgekehrt proportional zu den Testdaten sind.

Die Schritte a und b werden ggf. für weitere Zeilen wiederholt, nachdem das Substratpotential zuvor auf seinen ursprünglichen Wert zurückgesetzt wurde. Die Änderung des Substratpotentials um einen konstanten Betrag hat die gleiche Änderung des Potentials an der Oberfläche des Photoleiters zur Folge wie eine Test-Röntgenaufnahme mit gleichmäßiger Belichtung aller Bildpunkte des Photoleiters. Im Idealfall müßten dann alle Sonden für alle Bildpunkte auf der Oberfläche des Photoleiters die gleiche Signalamplitude liefern. In der Praxis ist diese Bedingung aber nicht erfüllt, und die Testdaten unterscheiden sich von Sonde zu Sonde und von Bildpunkt zu Bildpunkt. Die Größe der für die verschiedenen Bildpunkte ermittelten Testdaten ist ein Maß für die Sondenempfindlichkeit in dem betreffenden Bildpunkt. Daher lassen sich aus den Testdaten Korrekturfaktoren gewinnen, mit denen bei einer späteren Röntgenaufnahme die Bilddaten derart beaufschlagt werden, daß die korrigierten Bilddaten umgekehrt proportional zu den Testdaten und proportional zu den unkorrigierten Bilddaten sind.

Dabei müßte im Prinzip für jeden Bildpunkt ein Korrekturfaktor gespeichert werden, so daß der dafür vorgesehene Speicher die gleiche Kapazität haben müßte wie ein Bildspeicher. Dieser Aufwand läßt sich bei einer bevorzugten Ausführungsform dadurch reduzieren, daß für jede Sonde für wenigstens eine Zeile die Korrekturfaktoren bestimmt und gespeichert werden und daß die Bilddaten aller von diesen Sonden ausgelesenen Zeilen mit den Korrekturfaktoren beaufschlagt werden, die aus den gespeicherten Korrekturfaktoren abgeleitet werden. Diese Ausgestaltung eignet sich besonders für einen zylindermantelförmigen Photoleiter mit mehreren parallel zu der Achse des Photoleiters versetzten Sonden, die das Oberflächenpotential auf dem Photoleiter kreis- oder schraubenlinienförmig umschließenden Zeilen abtasten. Sie ist aber auch bei anderen Konfigurationen anwendbar, bei denen die Sondenempfindlichkeit in Zeilenrichtung wesentlich stärker schwankt als in Richtung senkrecht dazu. Es genügt daher, wenn Korrekturfaktoren nur für eine oder zwei Zeilen ermittelt werden und die Korrekturfaktoren für die übrigen Zeilen, die mit der gleichen Sonde ausgelesen werden, aus diesen abgeleitet werden.

Es hat sich gezeigt, daß bestimmte Bauformen von Sonden den zeitlichen Verlauf des Oberflächenpotentials nur verzerrt nachbilden. Sie liefern neben einer Signalkomponente, die der Änderung des Photoleiterpotentials entspricht, eine Komponente, die dem Differentialquotienten dieses Potentials nach der Zeit entspricht.

Nach einer Weiterbildung der Erfindung können auch diese Signalverzerrungen dadurch beseitigt werden, daß das Substratpotential nach der Aufladung (und während des Auslesens einer Zeile durch die Sonden) sprungartig um einen konstanten Betrag geändert wird, daß aus der Größe und der Änderung der dabei in aufeinanderfolgenden Abtastzeitpunkten erhaltenen Testdaten Filterkoeffizienten für eine digitale Filterung ermittelt werden, daß die Filterkoeffizienten gespeichert werden und daß bei einer nachfolgenden Röntgenaufnahme die Bilddaten aller mit der gleichen Sonde ausgelesenen Zeilen einer Filterung unter Heranziehung der gespeicherten Filterkoeffizienten unterzogen werden.

Eine Vorrichtung, die mittels der durch die Änderung des Substratpotentials bestimmten Korrekturdaten eine Verminderung der Artefakte in einer Röntgenaufnahme erzielen kann, ist dadurch gekennzeichnet, daß ein Speicher vorgesehen ist, in dem Korrekturfaktoren gespeichert sind, und daß die Bildverarbeitungseinheit so ausgebildet ist, daß die Bilddaten einer Röntgenaufnahme zwecks Artefaktverminderung mit den Korrekturfaktoren beaufschlagt werden. Allerdings ist dafür eine außerordentliche zeitliche und mechanische Stabilität der das Übertragungsverhalten der Sonden bestimmenden Parameter erforderlich. Eine Ausführungsform, die sich für die Beseitigung der Artefakte auch dann eignet, wenn die genannten Voraussetzungen nicht erfüllt sind, ist gekennzeichnet durch Mittel zur Änderung des Substratpotentials um einen konstanten Betrag und durch Mittel zum Erzeugen von Korrekturdaten aus den bei einer Änderung des Substratpotentials von der Sondenanordnung gelieferten Testdaten.

Die Erfindung wird nachstehend anhand der Zeichnung näher erläutert. Es zeigen:

Fig. 1 eine Vorrichtung, mit der das erfindungsgemäße Verfahren ausführbar ist,

Fig. 2a bis 2d den zeitlichen bzw. den räumlichen Verlauf verschiedener Signale in Verbindung mit der Ermittlung der Korrekturfaktoren,

Fig. 3a bis 3c den zeitlichen bzw. räumlichen Verlauf verschiedener Signale bei der Bestimmung der Filterkoeffizienten und

Fig. 4 ein Digitalfilter zur Verarbeitung der ermittelten Filterkoeffizienten.

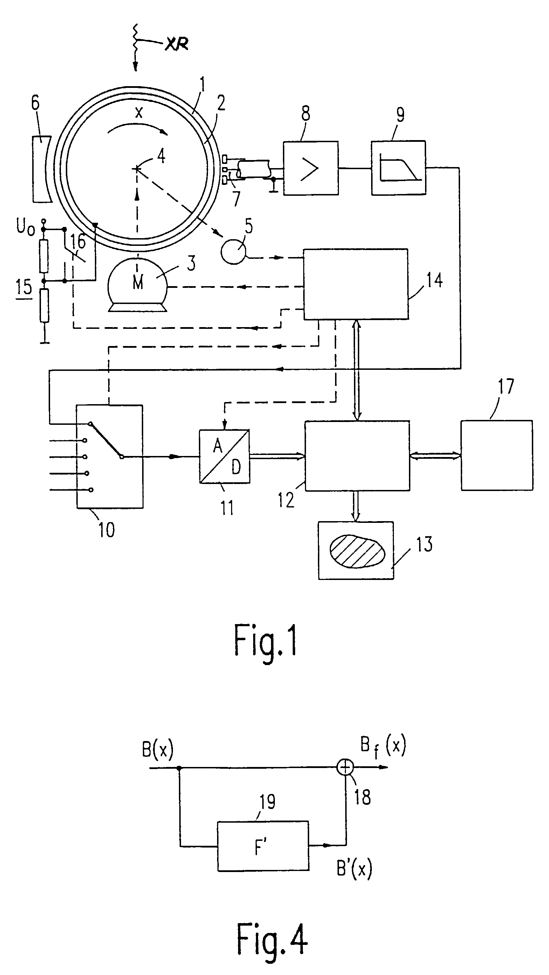

Fig. 1 zeigt einen Photoleiter 1, der in Form einer ca. 0,5 mm starken Selenschicht auf ein leitendes Substrat in Form eines Aluminiumzylinders 2 aufgebracht ist. Ein Motor 3 gestattet den Antrieb der Photoleiteranordnung 1,2 um deren zur Zeichenebene senkrechte Zylinderachse 4. Die Winkelstellung der Photoleiteranordnung 1,2 wird mittels eines geeigneten Winkelgebers 5 digital gemessen. Das Substrat 2 ist an eine Spannung $U_o$ von z.B. -1500 V anschließbar. Eine Coronaaufladeeinrichtung 6 dient dazu, vor einer Aufnahme die sich drehende Trommel überall gleichmäßig an ihrer Oberfläche auf ein Potential von 0 V aufzuladen, so daß über der Selenschicht 1 eine Spannung von 1500 V liegt. Wie bei XR symbolisch angedeutet, kann die Trommel (nach der Aufladung) durch eine Röntgenaufnahme belichtet werden.

Die Röntgenstrahlung ändert je nach Intensität die Leitfähigkeit der Selenschicht ortsabhängig mehr oder weniger stark, was eine entsprechende Entladung der Oberfläche zur Folge hat. Dadurch ändert sich das Oberflächenpotential. Die Änderung des Oberflächenpotentials wird von einer Sondenanordnung erfaßt, die eine Anzahl von Sonden - z.B. 32 - enthält, von denen in der Zeichnung nur eine Sonde 7 dargestellt ist. Die Sonden sind in Richtung der Achse 4 versetzt nebeneinander angeordnet und tasten das Potential auf nebeneinander liegenden ringförmigen Bereichen der Oberfläche des Photoleiters 1 ab. Bei dieser Abtastung rotiert die Trommel und gleichzeitig werden die Sonden gemeinsam in Richtung der Achse verschoben, und zwar um jeweils einen Bildpunkt pro Umdrehung der Photoleiteranordnung 1,2. Die Verschiebung kann stufenweise, vorzugsweise aber kontinuierlich erfolgen, so daß die erwähnten Abschnitte längs kreis- bzw. spiral- oder schraubenlinienförmiger Zeilen abgetastet werden.

Die Zeilenrichtung soll im folgenden mit x bezeichnet werden und die dazu im wesentlichen senkrechte, mit der Richtung der Zylinderachse 4 zusammenfallende Richtung mit y.

Jedes Sondensignal wird in einem gesonderten Kanal analog weiterverarbeitet, und zwar durch die Einheiten 8 und 9, die eine Verstärkung und Tiefpaßfilterung bewirken. Die analogen Ausgangssignale der einzelnen Kanäle, von denen Fig. 1 nur einen darstellt, werden den Eingängen eines Multiplexers 10 zugeführt, dessen Ausgang mit einem Analog-Digital-Wandler 11 verbunden ist. Der Multiplexer 10 entfällt, wenn für jede Sonde ein eigener Analog-Digitalwandler vorhanden ist. Die von dem Analog-Digital-Wandler 11 erzeugten digitalen Datenworte werden einer Bildverarbeitungseinheit 12 zugeführt, die u.a. einen Bildprozessor und Halbleiterspeicher zum Speichern wenigstens einer Röntgenaufnahme enthält. Die Bildverarbeitungseinheit gestattet die Ausgabe einer Röntgenaufnahme auf einem Monitor 13. Der gesamte Betriebsablauf wird von einem Steuerprozessor 14 gesteuert.

Insoweit als bisher beschrieben ist die Erfindung aus den EP-OS 219 897 und EP-OS 456 322 bekannt. Auf diese Veröffentlichungen wird ausdrücklich bezug genommen.

In den auf diese Weise erzeugten Röntgenaufnahmen können sich streifenförmige Artefakte bemerkbar machen. Ursache für solche Artefakte können unterschiedliche Sondenempfindlichkeiten, aber auch unterschiedliche frequenzabhängige Übertragungsfunktionen der einzelnen Sonden in Verbindung mit dem nachgeschalteten Verstärker sein. Die Erfindung nutzt die Erkenntnis aus, daß diese Ursachen sich nicht von Röntgenaufnahme zu Röntgenaufnahme ändern, sondern über einen längeren Zeitraum stabil bleiben. Deshalb ist es möglich, in einem Testmodus Korrekturdaten zur Beseitigung der Bildartefakte zu ermitteln, diese Korrekturdaten zu speichern und bei nachfolgenden Röntgenaufnahmen die Bilddaten mit den gespeicherten Korrekturdaten zwecks Beseitigung der Artefakte zu beaufschlagen. Dieser Testmodus kann in gewissen zeitlichen Abständen wiederholt werden, z.B. einmal täglich, um etwaige Veränderungen zu berücksichtigen.

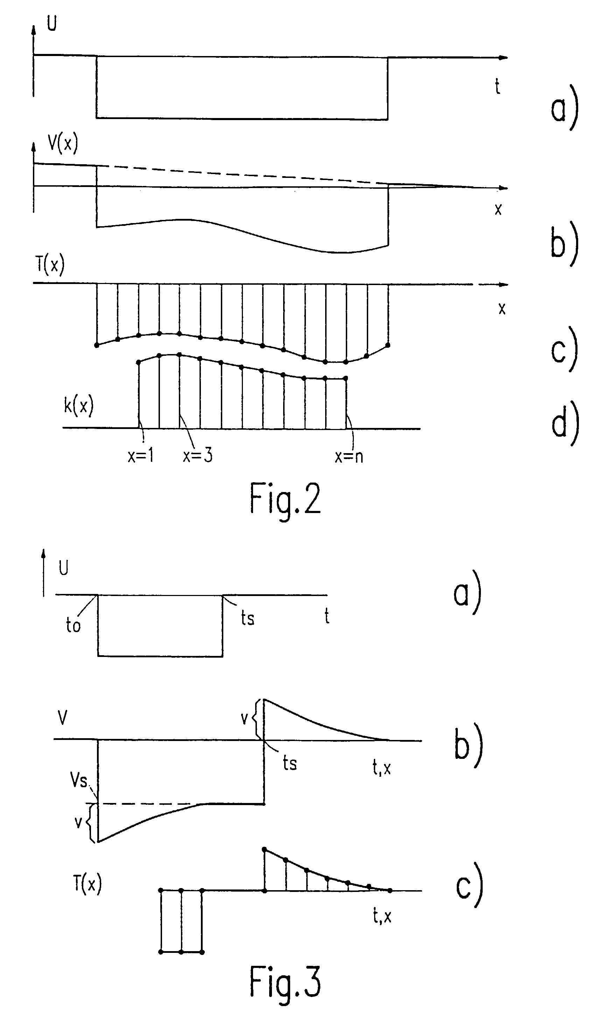

Nachfolgend soll zunächst anhand von Fig. 2 die Ermittlung von Korrekturdaten (Korrekturfaktoren) beschrieben werden, mit denen die unterschiedlichen Sondenempfindlichkeiten bzw. die Schwankung der Empfindlichkeit einer Sonde beim Abtasten einer Zeile kompensiert werden.

Im Testmodus wird zunächst - insoweit genauso wie in dem der Erzeugung von Röntgenaufnahmen dienenden Aufnahmemodus - der Photoleiter 1 aufgeladen. Zu diesem Zweck wird an das Substrat die Spannung $U_o$ angeschlossen, wonach die Aufladung mittels der Koronaaufladeeinrichtung 6 erfolgt. Am Ende der Aufladung beträgt das Potential an der gesamten Oberfläche des Photoleiters 1 Null Volt. Wegen der Erdung der Anordnung 7,8 ergibt sich dabei keine Potentialditferenz zwischen der Oberfläche des Photoleiters und der Sonde, so daß auf der aktiven Fläche der Sonde keine Ladungsträger influenziert werden und der Verstärker 8 kein Ausgangssignal liefert.

Nach dem Aufladen der Oberfläche des Photoleiters wird das Substratpotential um einen konstanten Betrag abgesenkt (oder erhöht). Zu diesem Zweck wird die Substratspannung von einem Spannungsteiler 15 abgeleitet, der an die konstante Versorgungsspannung $U_o$ (-1500 V) angeschlossen ist und der so bemessen ist, daß an seinem Abgriff eine Spannung auftritt, die z.B. 90 % der Spannung $U_0$ beträgt. Der Abgriff ist über einen vom Steuerprozessor 14 steuerbaren Schalter 16 mit dem Versorgungsspannungsanschluß verbunden. Der Schalter 16 ist während der Aufladung geschlossen, so daß das Substratpotential $U_o$ ist und wird nach der Aufladung geöffnet, so daß das Potential auf 90 % von $U_o$ sinkt. Nach dem Auslesen der Testdaten einer Zeile wird der Schalter 16 wieder geschlossen, um zur Erfassung der Testdaten einer weiteren Zeile wieder geöffnet zu werden.

Die Absenkung des Substratpotentials hat zur Folge, daß sich das Potential überall an der Oberfläche des Photoleiters um denselben Betrag ändert. Fig. 2a zeigt den zeitlichen Verlauf des Oberflächenpotentials U.

Schon vor der Änderung des Substratpotentials beginnt das zeilenweise Auslesen der Oberfläche durch die Sonden, wobei die Trommel rotiert und die Sonden jeweils um einen Bildpunkt pro Umdrehung in axialer Richtung verschoben werden. Das Auslesen des Photoleiters soll dabei so erfolgen, daß zunächst die Bereiche ausgelesen werden, die bei einer Röntgenaufnahme nicht von Strahlung getroffen werden und daß der für die Röntgenaufnahmen vorgesehene Bereich der einzelnen Zeilen erst nach einer Verzögerungszeit erreicht wird, die ausreicht, um etwaige Ausgleichsvorgänge oder dergleichen abklingen zu lassen.

Im Idealfall müßte die von der Sonde gelieferte Spannung V(x) vor (und nach) der Absenkung des Substratpotentials den Wert Null und während der Absenkung des Substratpotentials einen konstanten Wert haben. Tatsächlich ergibt sich jedoch der in Fig. 2b dargestellte räumliche Verlauf der Spannung V(x), wobei der Parameter x die Lage der abgetasteten Bildpunkte in einer Zeile kennzeichnet, die von dem Winkelgeber 5 gemessen wird. Man erkennt, daß vor und nach der Absenkung des Potentials die Spannung V(x) von Null verschieden ist. Diese Abweichungen sind auf Offseteffekte sowie auf Drifteffekte während des Auslesens einer Zeile zurückzuführen. Aus der Größe dieser Abweichungen vor und nach dem Absenken des Potentials läßt sich aber für jeden Bildpunkt die Größe des Offset- und Drifteffektes durch lineare Interpolation in der Bildverarbeitungseinheit 12 ermitteln und kompensieren.

Fig. 2c zeigt die Folge der digitalen Testdaten T(x), die sich nach der Digitalisierung und der beschriebenen Offset- und Driftkompensation des Signals V(x) in Fig. 2b ergeben. Man erkennt, daß auch nach dieser Kompensation die Testdaten noch nicht konstant sind, sondern sich in x- bzw. in Zeilenrichtung ändern. Diese Änderungen beruhen auf Änderungen des Abstands zwischen der Sonde und der Oberfläche des Photoleiters beim Rotieren der Photoleiteranordnung 1,2. Diese Abstandsschwankungen ihrerseits beruhen darauf, daß die Oberfläche des Photoleiters nicht exakt zylinderförmig in bezug auf die Achse verläuft und daß das das Substrat 2 nicht exakt in der Achse 4 gelagert ist.

Die Größe der Testdaten ist ein Maß für die Empfindlichkeit der Sonde in den verschiedenen Bildpunkten. Dieser Empfindlichkeitsverlauf ergibt sich auch bei nachfolgenden Röntgenaufnahmen. Die Testdaten können daher zur Korrektur herangezogen werden, indem aus ihnen Korrekturfaktoren gebildet werden, die den Testdaten umgekehrt proportional sind. Werden damit die Bilddaten von nachfolgenden Röntgenaufnahmen multipliziert, dann sind die so korrigierten Bilddaten unabhängig von den Empfindlichkeitsschwankungen der Sonde.

Für den Korrekturfaktor k(x,y) gilt also die Beziehung

$$k(x,y) = T_r/T(x,y) \qquad (1)$$

Dabei sind T(x,y) die Testdaten für die Bildpunkte mit den Koordinaten x,y und $T_r$ ist ein für alle Sonden gleicher Referenzwert. Der Wert $T_r$ kann als arithmetischer Mittelwert aller Testwerte berechnet werden; er kann aber auch willkürlich festgelegt werden, z.B. so daß die Zahlenwerte für k(x,y) in einem besonders günstigen Bereich liegen. Da aus den Testdaten T(x,y) sämtlicher Sonden die Korrekturfaktoren gemäß Gleichung 1 berechnet werden, gleichen sich auch Empfindlichkeitsunterschiede zwischen den einzelnen Sonden aus, die durch unterschiedliche Sondenaperturen oder unterschiedliche Eingangskapazitäten verursacht worden sind.

Die auf diese Weise in der Testphase in der Bildverarbeitungseinheit 12 ermittelten Korrekturfaktoren k(x,y) werden in einem Speicher 17 gespeichert. Bei einer späteren Röntgenaufnahme werden sie zur Korrektur der sich dabei ergebenden Bilddaten B(x,y) herangezogen, so daß sich korrigierte Bilddaten $B_c(x,y)$ ergeben, entsprechend der Beziehung

$$B_c(x,y) = k(x,y) * B(x,y) \qquad (2)$$

Nach Gleichung 2 müßte an sich für jeden Bildpunkt (x,y) in dem von einer Sonde erfaßten Abschnitt ein Korrekturfaktor k(x,y) in der angegebenen Weise ermittelt und gespeichert werden. Es hat sich jedoch gezeigt, daß die Empfindlichkeit einer Sonde sich in Richtung der Achse 4, d.h. in y-Richtung, verhältnismäßig wenig ändert. Es genügt daher, wenn die Testdaten für jede Sonde nur für eine Zeile bestimmt werden und daraus die Korrekurfaktoren für diese Zeile berechnet und gespeichert werden. Aus diesem Satz k(x) von Korrekturfaktoren für eine Zeile (dieser Satz wird im nachfolgenden auch als "Korrekturvektor" bezeichnet) lassen sich die Korrekturvekforen für alle anderen Zeilen y des Bildes nach der Beziehung berechnen

$$k(x,y) = k(x) \qquad (3)$$

Fig. 2d zeigt den auf diese Weise für die n Bildpunkte einer Zeile (wobei n z.B. 2000 ist) berechneten Korrekturvektor. Die Korrekturfaktoren, aus denen sich der Korrrekturvektor zusammensetzt, sind umgekehrt proportional zu den Testdaten gemäß Fig. 2c in den betreffenden Bildpunkten.

Unter Umständen können sich bei einer Korrektur mit nur einem Korrekturvektor pro Sonde Kleine Artefakte ergeben, insbesondere an den Rändern des von einer Sonde erfaßten Abschnitts. Die Genauigkeit kann verbessert werden, wenn für zwei Zeilen, vorzugsweise die beiden Zeilen an den Rändern des Abschnittes, je ein Korrekturvektor $k_1(x)$ und $k_2(x)$ ermittelt und im Speicher 17 gespeichert werden und wenn nach einer Röntgenaufnahme die Korrekturfaktoren k(x,y) aus diesen beiden Korrekturvektoren durch Interpolation gemäß der Gleichung

$$k(x,y) = k_1(x) + (k_2(x) - k_1(x)) * (y-y_1)/(y_2-y_1) \qquad (4)$$

bestimmt werden. $y_1$ und $y_2$ bezeichnen dabei die Lage der erwähnten Zeilen innerhalb des von der Sonde erfaßten Abschnitts, während y die Zeile angibt, in der der Bildpunkt liegt, für den ein Korrekturfaktor bestimmt werden soll.

Mit der oben erläuterten Korrektur lassen sich alle Artefakte beseitigen, die auf ungleiche Empfindlichkeiten bzw. auf Empfindlichkeitsschwankungen zurückzuführen sind. Es hat sich jedoch gezeigt, daß es auch Artefakte gibt, die darauf beruhen, daß das Sondensignal nicht exakt den zeitlichen Verlauf des Oberflächenpotentials beim Auslesen wiedergibt. So gibt es Sonden mit differenzierender Charakteristik, die bei einem Potentialsprung an der Oberfläche des Photoleiters ein Ausgangssignal erzeugen, das zunächst über den stationären Wert hinausspringt, um danach exponentiell auf diesen stationären Wert abzuklingen.

Fig. 3a zeigt einen zeitlich rechteckförmig verlaufenden Potentialsprung an der Oberfläche des Photoleiters 1. Dieser Potentialsprung kann dadurch erzeugt werden, daß zur Zeit t=t0 der Schalter 16 geöffnet und zur Zeit t=ts geschlossen wird. Die Spannung V am Ausgang des Verstärkers 8 verläuft dann so wie in Fig. 3b dargestellt. Die Spannung V springt zum Zeitpunkt t0 um den Betrag v über den stationären Wert $V_s$ hinaus und klingt dann exponentiell auf den stationären Wert $V_s$ ab. Bei der Rückflanke zur Zeit t=ts springt die Spannung V über den Nullpunkt hinaus - um den gleichen Betrag wie zuvor für den stationären Wert $V_s$ - und klingt dann auf Null ab - mit der gleichen Zeitkonstante wie während des Rechteckimpulses. Die Größe von v sowie die Zeitkonstante, mit der dieser Überschwinger abklingt, sind von Sonde zu Sonde unterschiedlich. Anders als in der Zeichnung dargestellt ist die Höhe des Überschwingers v wesentlich kleiner als der stationäre Wert $V_s$; v liegt bei etwa 5 % von $V_s$.

Die geschilderten frequenzabhängigen Signalverzerrungen werden bei einer späteren Röntgenaufnahme durch die in Fig. 4 dargestellte Filteranordnung beseitigt, die von allen in Zeilenrichtung aufeinanderfolgenden Bildwerten B(x) durchlaufen wird. Das Filter weist ein Addierglied 18 auf, das das Eingangssignal B(x) und ein mittels eines Digitalfilters 19 gefiltertes Signal B'(x) addiert, so daßfür das Ausgangssignal $B_f(x)$ die Beziehung gilt

$$. . B_f(x) = B(x) + B'(x) \qquad (5)$$

Das Digitalfilter 19 ist ein rekursives Filter erster Ordnung, dessen Ausgangswert B' von der Änderung seiner Eingangswerte bestimmt wird. Dieses Filter bestimmt aus dem Eingangswert B(x), dem vorangegangenen Eingangswert B(x-1) und dem vorangegangenen Filterwert B'(x-1) den aktuellen Filterwert B'(x) nach der Beziehung

$$. . . B'(x) = a(B(x)-B(x-1)) + b * B'(x-1) \qquad (6)$$

Wenn die Filterkoeffizienten a und b passend gewählt sind, entspricht das Signal B'(x) dem jeweiligen Überschwinger, jedoch mit entgegengesetzter Polarität, so daß in dem Signal $B_f(x)$ nach der Addition von B(x) und B'(x) der Überschwinger nicht mehr enthalten ist. Es versteht sich von selbst, daß die Filterung auch dann wirkt, wenn sich das Potential auf der Oberfläche des Photoleiters nicht sprungartig ändert, sondern entsprechend dem Bildinhalt.

Das beschriebene Digitalfilter kann mit einer Digitalschaltung aus Addier-, Subtrahier- und Verzögerungsgliedern realisiert werden. Der digitale Filterprozeß kann aber auch durch einen Filteralgorithmus in der entsprechend den Gleichungen 5 und 6 programmierten Bildverarbeitungseinheit 12 realisiert werden.

Der Filterkoeffizient a ergibt sich aus dem Quotienten $v/V_s$, d.h. er stellt die relative Höhe des Überschwingers dar. Der Wert b stellt das Verhältnis zweier aufeinanderfolgender Abtastwerte dar. Er ist stets Kleiner als 1 und für eine gegebene Abtastfrequenz konstant. Ändert sich jedoch die Abtastfrequenz, mit der der Analog-Digital-Wandler jedes einzelne Signal in eine Folge digitaler Datenworte umsetzt, dann ändert sich b ebenfalls; mit sinkender Abtastfrequenz nimmt auch b ab.

Nachfolgend wird die Bestimmung der für die jeweilige Sonde spezifischen Filterkoeffizienten a und b anhand von Fig. 3 erläutert.

Wie beim Ermitteln der Korrekturfaktoren zum Ausgleich unterschiedlicher Sondenempfindlichkeiten wird zunächst die Trommel aufgeladen, bis überall an der Oberfläche des Photoleiters Erdpotential herrscht. Der Schalter 16 ist dabei geschlossen. Danach wird der Schalter zur Zeit t0 geöffnet und zur Zeit ts wieder geschlossen, so daß sich der in Fig. 3a dargestellte zeitliche Verlauf des Oberflächenpotentials ergibt.

Es wird der zeitliche Verlauf des von der Sonde gelieferten analogen Signales V vor und nach einem der Potentialsprünge, vorzugsweise bei der Rückflanke zur Zeit t=ts abgetastet und in eine Folge von digitalen Datenworten umgesetzt. Im Prinzip könnte bei diesem Auslesevorgang die Photoleiteranordnung stillstehen, jedoch könnten dann die Taktimpulse für den Analog-Digital-Wandler 11 nicht aus den Signalen des Winkelgebers 5 abgeleitet werden, sondern müßten von einem gesonderten Taktgenerator erzeugt werden. Um das zu vermeiden, erfolgt dieses Auslesen bei rotierender Photoleiteranordnung 1,2, wobei zur Zeit t=ts ein Bildpunkt ausgelesen werden soll, der innerhalb des bei einer Röntgenaufnahme belichteten Bereiches der Photoleiteranordnung liegt.

Das Sondensignal ändert sich dann abhängig vom Ort x. Es muß daher mit den zuvor zu ermittelnden Korrekturfaktoren k(x) beaufschlagt werden, um die Signalfälschungen zu unterdrücken, die bei rotierender Trommel als Folge der Empfindlichkeitsschwankungen der Sonde auftreten. Zuvor müssen die Offset- und Drifteinflüsse kompensiert werden, wie in Verbindung mit Fig. 2b erläutert. Die davon ausgehenden Signalverfälschungen sind bei der Darstellung des Sondensignals in Fig. 3b der Übersichtlichkeit halber weggelassen worden.

Fig. 3c zeigt den Verlauf der Testdaten T(x), die nach der Digitalisierung entstehen und die den zeitlichen bzw. denräumlichen Verlauf des Oberflächenpotentials in der betreffenden Zeile - befreit von den geschilderten Störeinflüssen - darstellen. Der Testwert, der sich für den Zeitpunkt t=ts bzw. für den zu diesem Zeitpunkt gerade ausgelesenen Bildpunkt ergibt, läßt sich aus der Folge der Testdaten durch numerisches Differenzieren einfach ermitteln. Dieser Testwert, der die Höhe des Überschwingers v repräsentiert, wird auf den vorangegangenen Testwert normiert, der dem stationären Wert Vs entspricht. Der Quotient v/Vs bildet den Filterkoeffizienten a, während der Wert b als Quotient T(x)/T(x-1) zweier nach dem Zeitpunkt t=ts aufeinanderfolgender Testwerte T(x-1) und T(x) bestimmt werden kann.

Die auf diese Weise für alle Sonden individuell bestimmten Filterkoeffizienten a, b werden ebenfalls in dem Speicher 17 gespeichert und nach späteren Röntgenaufnahmen zur zeilenweisen Filterung der Bildsignale entsprechend den Gleichungen 5 und 6 herangezogen.

Vorstehend wurde die Erfindung anhand eines zylindermantelförmigen Photoleiters erläutert. Die Erfindung ist aber auch bei einer ebenen Photoleiteranordnung anwendbar.

**Patentansprüche**

1. Verfahren zum Erzeugen von Röntgenaufnahmen mit einem auf einem leitenden Substrat (2) angebrachten Photoleiter (1), dessen Oberflächenpotential mittels Sonden (7) auslesbar ist, <u>gekennzeichnet durch</u> folgende Verfahrensschritte:

    a) Aufladen des Photoleiters (1) auf ein definiertes Potential

    b) Ändern des Subtratpotentials und Auslesen des dadurch bewirkten Potentialverlaufes (U) auf der Oberfläche des Photoleiters

    c) Erzeugen von Testdaten (T(x)), die dem örtlichen und/oder zeitlichen Verlauf des Potentials an der Oberfläche des Photoleiters entsprechen

    d) Ermitteln von Korrekturdaten (a,b,k(x)), die der Abweichung der Testdaten von ihrem Idealwert kompensieren

    f) Speichern der Korrekturdaten

    g) Verarbeitung der Bilddaten von nachfolgenden Röntgenaufnahmen unter Heranziehung der Korrekturdaten.

2. Verfahren nach Anspruch 1, <u>gekennzeichnet durch</u> folgende Schritte:

    a) Ändern des Substratpotentials um einen konstanten Betrag.

    b) Bilden von Korrekturfaktoren (k(x)) für auf der Oberfläche des Photoleiters befindliche Bildpunkte in Abhängigkeit von dem Quotienten (Tr/T(x)) aus einem für alle Bildpunkte gleichen Referenzwert ($T_r$) und den Testdaten (T(x).

    c) Beaufschlagen der nach einer Röntgenaufnahme ausgelesenen Bilddaten (B(x,y)) mit dem zugehörigen Korrekturwert (k(x)) derart, daß sich korrigierte Bilddaten ($B_c$(x,y)) ergeben, die proportional zu den Bilddaten (B(x,y)) und umgekehrt proportional zu den Testdaten (T(x)) sind.

3. Verfahren nach Anspruch 2, <u>dadurch gekennzeichnet</u>, daß für jede Sonde (7) für wenigstens eine Zeile die Korrekturfaktoren (k(x)) bestimmt und gespeichert werden und daß die Bilddaten (B(x,b)) aller von dieser Sonden ausgelesenen Zeilen mit den Korrekturfaktoren beaufschlagt werden, die aus den gespeicherten Korrekturfaktoren (k(x)) abgeleitet werden.

4. Verfahren nach Anspruch 3,
dadurch gekennzeichnet, daß für jede Sonde die Korrekturfaktoren (k₁(x); k₂(x)) für zwei nicht nebeneinanderliegende Zeilen gebildet werden und daß die Korrekturfaktoren für die übrigen Zeilen dieser Sonde aus den Korrekturfaktoren (k(x)) der beiden Zeilen durch Interpolation abgeleitet werden.

5. Verfahren nach Anspruch 1,
dadurch gekennzeichnet, daß das Substratpotential nach der Aufladung sprungartig um einen konstanten Betrag geändert wird, daß aus der Größe und der Änderung der dabei zeitlich nacheinander ermittelten Testdaten (T(x)) Filterkoeffizienten (a,b) für eine digitale Filterung bestimmt werden, daß die Filterkoeffizienten (a,b) gespeichert werden und daß bei einer nachfolgenden Röntgenaufnahme die Bilddaten (B(x,y)) aller mit der gleichen Sonde ausgelesenen Zeilen einer Filterung unter Heranziehung der gespeicherten Filterkoeffizienten unterzogen werden.

6. Vorrichtung zur Erzeugung von Röntgenaufnahmen mit einem auf einem leitenden Substrat (2) angebrachten Photoleiter (1), einer Sondenanordnung (7) zum Auslesen des Oberflächenpotentials des Photoleiters, einer Aufladeanordnung (6) zum Aufladen der Oberfläche des Photoleiters und einer Bildverarbeitungseinheit (12) zur Rekonstruktion einer Röntgenaufnahme aus den von der Sondenanordnung gelieferten Bilddaten,
dadurch gekennzeichnet, daß ein Speicher (17) vorgesehen ist, in dem Korrekturfaktoren gespeichert sind, und daß die Bildverarbeitungseinheit so ausgebildet ist, daß die Bilddaten einer Röntgenaufnahme zwecks Artefaktverminderung mit den Korrekturfaktoren beaufschlagt werden.

7. Vorrichtung nach Anspruch 6,
dadurch gekennzeichnet, daß der Speicher (17) für jede Sonde (7) für wenigstens eine Zeile Korrekturfaktoren enthält und daß Mittel (12) zur Ableitung von Korrekturfaktoren für Bildpunkte in andere Zeilen aus den gespeicherten Bildpunkten auf der gleichen Mantellinie zugeordneten Korrekturfaktoren vorgesehen sind.

8. Vorrichtung nach einem der Ansprüche 6 oder 7,
gekennzeichnet durch Mittel (16) zur Änderung des Substratpotentials um einen konstanten Betrag und durch Mittel (12) zum Erzeugen von Korrekturdaten aus den bei einer Änderung des Substratpotentials von der Sondenanordnung gelieferten Testdaten.

**Claims**

1. A method of generating X-ray images by means of a photoconductor (1) which is provided on a conductive substrate (2) and whose surface potential can be read by means of probes (7), characterized in that the method comprises steps of:

    a) charging the photoconductor (1) to a defined potential,
    b) varying the substrate potential and reading the variation (U) thus caused on the photoconductor surface,
    c) generating test data (T(x)) which corresponds to the spatial and/or temporal variation of the potential on the surface of the photoconductor,
    d) determining correction data (a, b, k(x)) which compensates for the deviation of the test data from its ideal value,
    e) storing the correction data,
    f) processing the image data of subsequent X-ray exposures while taking into account the correction data.

2. A method as claimed in Claim 1, characterized in that the method comprises steps of:

    a) varying the substrate potential by a constant amount,
    b) forming correction factors (k(x)) for pixels on the photoconductor surface in dependence on the quotient (T_r/T(x)) of a reference value (T_r), being the same for all pixels, and the test data (T(x)),
    c) applying the associated correction value (k(x)) to the image data (B(x,y)) read after an X-ray exposure so that there is obtained corrected image data (B_c(x,y)) which is proportional to the image data (B(x,y)) and inversely proportional to the test data (T(x)).

3. A method as claimed in Claim 2, characterized in that for each probe (7) the correction factors (k(x)) are determined for at least one line of an X-ray image, the image data (B(x,b)) of all lines read by said probes being subjected to the correction factors derived from the stored correction factors (k(x)).

4. A method as claimed in Claim 3, characterized in that for each probe the correction factors (k₁(x); k₂(x)) are formed for two non-adjacent lines, the correction factors for the other lines of this probe being derived from the correction factors (k(x)) of the two lines by interpolation.

5. A method a claimed in Claim 1, characterized in that after the charging the substrate potential is varied in a step-like manner by a constant amount, that filter coefficients (a, b) for a digital filtering operation are determined from the magnitude and the variation of the test data (T(x)) thus determine successively in time, that the filter coefficients (a, b) are stored and that during a subsequent X-ray exposure the image data (B(x,y)) of all lines read by the same probe are subjected to a filtering operation while taking into account the stored filter coefficients.

6. A device for generating X-ray images, comprising a photoconductor (1) provided on a conductive substrate (2), a probe device (7) for reading surface potential of the photoconductor, a charging device (6) for charging the surface of the photoconductor, and an image processing unit (12) for reconstructing an X-ray image from the image data supplied by the probe device, characterized in that there is provided a memory (17) in which correction factors are stored, and that the image processing unit is constructed so that the correction factors are applied to the image data of an X-ray image in order to reduce artifacts.

7. A device as claimed in Claim 6, characterized in that for each probe (7) the memory (17) stores correction factors for at least one line, there being provided means (12) for deriving correction factors for pixels in other lines from the stored correction factors associated with pixels on the same surface line.

8. A device as claimed in one of the Claims 6 or 7, characterized in that there are provided means (16) for varying the substrate potential by a constant amount an also means (12) for generating correction data from the test data supplied by the probe device upon variation of the substrate potential.

**Revendications**

1. Procédé de production de radiographies avec un photoconducteur (1) appliqué sur un substrat conducteur (2) dont le potentiel de surface peut être lu à l'aide de sondes (7), caractérisé par les étapes suivantes du procédé :

a) charge du photoconducteur (1) sur un potentiel défini;
b) modification du potentiel du substrat et lecture du tracé du potentiel (U) ainsi obtenu à la surface du photoconducteur;
c) production de données de test (T(x)) qui correspondent au tracé spatial et/ou temporel du potentiel à la surface du photoconducteur;
d) détermination de données de correction (a, b,k(x)) qui compensent l'écart des données de test par rapport à leur valeur idéale;
e) sauvegarde des données de correction;
f) traitement des données d'image par radiographies successives en utilisant les données de correction.

2. Procédé selon la revendication 1, caractérisé par les étapes suivantes :

a) modification du potentiel du substrat d'une valeur constante;
b) formation de facteurs de correction (k(x)) pour les pixels se trouvant à la surface du photoconducteur en fonction du quotient (Tr/T(x)) à partir d'une valeur de référence ($T_r$) identique pour tous les pixels et les données de test T(x);
c) admission des données d'image lues après une radiographie (B(x,y)) avec la valeur de correction correspondante (k(x)) de manière à obtenir des données d'image corrigées ($B_c$(x, y)) qui sont proportionnelles aux données d'image (B(x,y)) et sont inversement proportionnelles aux données de test (T(x)).

3. Procédé selon la revendication 2, caractérisé en ce que, pour chaque sonde (7), les facteurs de correction (k(x)) sont déterminés et sauvés pour au moins une ligne et en ce que des données d'image (B(x, b)) de toutes les lignes lues par ces sondes sont admises avec les facteurs de correction qui sont dérivés des facteurs de correction sauvés (k(x)).

4. Procédé selon la revendication 3, caractérisé en ce que, pour chaque sonde, les facteurs de correction ($k_1$(x);$k_2$(x)) sont formés pour deux lignes non adjacentes et en ce que les facteurs de correction pour les autres lignes de cette sonde sont dérivés par interpolation à partir des facteurs de correction (k(x)) des deux lignes.

5. Procédé selon la revendication 1, caractérisé en ce que le potentiel du substrat est modifié par à-coups après la charge d'une valeur constante, en ce qu'à partir de la valeur et de la modification des données de test (T(x)) déterminées successivement dans le temps à cette occasion, des coefficients de filtrage (a, b) sont déterminés pour un filtrage numérique, en ce que les coefficients de filtrage (a, b) sont sauvés et en ce que, lors d'une radiographie successive, les données d'image (B(x,y)) de toutes les lignes lues avec la même sonde sont soumises à un filtrage en utilisant les coefficients de filtrage sauvés.

6. Dispositif de production de radiographies avec un photoconducteur (1) d'un dispositif de sondes (7) appliqué sur un substrat conducteur (2) pour la lecture du potentiel de surface du photoconducteur, un dispositif de charge (6) pour la charge de la surface du photoconducteur et une unité de traitement d'image (12) pour la reconstruction d'une radiographie à partir des données d'image fournies par le dispositif à sondes, caractérisé en ce qu'il est prévu une mémoire (17) dans laquelle sont sauvés des facteurs de correction et en ce que l'unité de traitement d'image est conçue de telle manière que les données d'image d'une radiographie soient amenées avec les facteurs de correction en vue de la réduction des artefacts.

7. Dispositif selon la revendication 6, caractérisé en ce que la mémoire (17) pour chaque sonde (7) contient des facteurs de correction pour au moins une ligne et en ce que des moyens (12) sont prévus pour déduire des facteurs de correction pour les pixels dans les autres lignes à partir des facteurs de correction affectés aux pixels sauvés sur la même ligne.

8. Dispositif selon l'une des revendications 6 ou 7, caractérisé par des moyens (16) pour la modification du potentiel du substrat d'une valeur constante et par des moyens (12) pour la production de données de correction à partir des données de test fournies par le dispositif de sondes en cas de modification du potentiel du substrat.

Fig.1

Fig.4

Fig.2

Fig.3